(19) Europäisches Patentamt
European Patent Office
Office européen des brevets

(11) **EP 1 176 428 B1**

(12) **EUROPÄISCHE PATENTSCHRIFT**

(45) Veröffentlichungstag und Bekanntmachung des Hinweises auf die Patenterteilung:
**01.08.2007   Patentblatt 2007/31**

(51) Int Cl.:
***G01S 3/802*** *(2006.01)*

(21) Anmeldenummer: **01115339.2**

(22) Anmeldetag: **26.06.2001**

(54) **Verfahren zur Verbesserung des Signal/Stör-Verhältnisses einer Sonargruppe**

Method for improving the signal-to-noise ratio of a sonar array

Procede pour ameliorer le rapport signal sur bruit d'un réseau d'antennes sonar

(84) Benannte Vertragsstaaten:
**DE FR GB**

(30) Priorität: **26.07.2000   DE 10036291**

(43) Veröffentlichungstag der Anmeldung:
**30.01.2002   Patentblatt 2002/05**

(73) Patentinhaber: **ATLAS ELEKTRONIK GMBH**
**28305 Bremen (DE)**

(72) Erfinder:
• **Neumeister, Dirk**
**28309 Bremen (DE)**
• **Wicker, Kai**
**28357 Bremen (DE)**
• **Stumpff, Ulrich**
**28857 Syke (DE)**

(56) Entgegenhaltungen:
US-A- 4 274 148     US-A- 4 931 977
US-A- 5 251 186     US-A- 5 390 154
US-A- 5 425 000

• **PATENT ABSTRACTS OF JAPAN vol. 1996, no. 02, 29. Februar 1996 (1996-02-29) -& JP 07 253464 A (MITSUBISHI PRECISION CO LTD), 3. Oktober 1995 (1995-10-03)**

**Beschreibung**

Die Erfindung betrifft ein Verfahren zur Störbefreiung von Gruppensignalen der im Oberbegriff des Anspruchs 1 definierten Gattung.

Bei einer bekannten Schaltungsanordnung zum Bilden von zeitlich aufeinanderfolgenden Gruppensignalen in der Peiltechnik, insbesondere in der Wasserschalltechnik, (DE 30 48 240 A1) wird zur Störbefreiung der Gruppensignale einem Addierwerk, an dessen Ausgang die Gruppensignale der Gruppencharakteristiken erscheinen, eine Integrationsschaltung, die einen Mittelwert über eine vorgebbare Zahl von nacheinander am Ausgang des Addierwerks anstehenden Werten der Gruppensignale bildet, und ein Verzögerungsglied mit einstellbarer Speicherzeit nachgeschaltet, deren Maximum einer Ausgabezeit der vorgegebenen Zahl von Werten am Ausgang des Addierwerks entspricht. Die Ausgänge der Integrationsschaltung und des Verzögerungsglieds sind mit einem Verhältnisbildner verbunden, an dessen Ausgang nacheinander das Nutz/Störverhältnis (Signal/Noise-Verhältnis oder S/N-Verhältnis) der Gruppensignale ansteht. Durch diese dem Addierwerk nachgeordnete Schaltungsanordnung wird eine Bewertung des Gruppensignals einer Gruppencharakteristik insofern erreicht, als der Störhintergrund innerhalb eines Winkelsektors, in dem die Gruppencharakteristik liegt, ermittelt wird und ins Verhältnis zum Gruppensignal dieser Gruppencharakteristik gesetzt wird. Das Verhältnis gibt das S/N-Verhältnis des Gruppensignals an. Da die Richtungen der Gruppencharakteristiken jeweils um gleiche Winkel versetzt sind, gibt eine vorgegebene Zahl von Gruppencharakteristiken einen Winkelsektor an, wobei jedem Gruppensignal dieser vorgegebenen Zahl ein Winkel innerhalb des Winkelsektors zugeordnet ist. Die Gruppensignale, die zeitlich nacheinander am Ausgang des Addierwerks erscheinen, sind damit eine Funktion des Winkels. In der Integrationsschaltung werden die Gruppensignale über dem Winkel integriert, wobei die Zahl der Gruppencharakteristiken, über die die Mittelwertbildung erfolgt, die Größe des Winkelsektors angibt.

Der Vorteil dieser Schaltungsanordnung besteht darin, daß eine Beurteilung der empfangenen Wellenenergie anhand des S/N-Verhältnisses besonders einfach ist. Eine Folge von Ausgangssignalen, die ein Maximum aufweist, zeigt, welche der Gruppencharakteristiken auf ein Ziel weist, so daß eine weitere Auswertung des Gruppensignals mit dem größten S/N-Verhältnis lohnend ist. Mit einer Schwelle, die abhängig von der gewünschten Falschalarmrate gewählt werden kann, sind Gruppensignale mit geringem S/N-Verhältnis unabhängig vom absoluten Betrag der empfangenen Wellenenergie leicht zu erkennen und für eine weitere Signalverarbeitung auszuschalten. Da eine größere Zahl von Gruppencharakteristiken zur Integration über dem Winkel herangezogen wird, die einen größeren Winkelsektor als die azimutale Ausdehnung eines Ziels überdecken, ist mit einer einfachen Mittelwertbildung der Störhintergrund bestimmbar

US 4.274.148 and US 4.931.977 beschrieben Verfahren gemäß dem Oberbegriff des Anspruchs 1. Beide Schriften offenbaren eine Normierung von Beamformer - Wichtungssignalen mit Hilfe von AGC-Regelschleifen.

Der Erfindung liegt die Aufgabe zugrunde, ein effizientes Verfahren zur Verarbeitung von Gruppensignalen der eingangs genannten Art anzugeben, mit dem bei gleichzeitigem Empfang von Zielgeräuschen und stärkeren Störsignalen, also auch bei schlechtem S/N-Verhältnis, die Empfangsrichtung des Zielgeräusches sicher erkannt und schwach Ziele nicht unterdrückt werden.

Die Aufgabe ist erfindungsgemäß durch die Merkmale im Anspruch 1 gelöst.

Das erfindungsgemäße Verfahren hat den Vorteil, daß Rauschen, nichtstationäre Vorgänge und kurzzeitig auftretende Störungen, die teilweise schwache Signalquellen maskieren können, aufgrund ihrer Inkohärenz bei der Bildung von Gruppensignalen weitgehend unterdrückt werden und dadurch keinen oder nur einen geringen Beitrag zum Gruppensignal bilden. Dazu wird jedes Gruppensignal mit einem Wichtungssignal bewertet. Das Wichtungssignal berücksichtigt Phasenabweichungen der verzögerten Emfangssignale, die auftreten, wenn nicht nur von dem mit der Gruppencharakteristik erfaßten Ziel, sondern gleichzeitig von Störquellen Schallwellen empfangen werden. Schwache, kohärente Signale, die von ein und derselben Signalquelle, nämlich einem Ziel, stammen, werden dadurch weit stärker berücksichtigt, so daß Detektion und Peilung wesentlich verbessert werden. Das Verfahren erfordert neben dem Signalverarbeitungsaufwand zur Bildung der Gruppensignale, auch Richtungsbildung oder lineares Beamforming genannt, einen nur geringen Zusatzaufwand zur Gewinnung des Wichtungssignals, das parallel zum linearen Beamforming berechnet wird. Das Ergebnis der Multiplikation des herkömmlich gebildeten Gruppensignals mit dem Wichtungssignal ist ein gewichtetes Gruppensignal, dessen Pegel adaptiv vom momentanen Nutz-/Störverhältnis abhängt.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer bevorzugten Ausführungsform der Erfindung wird zur Berechnung des Wichtungssignal aus jedem Empfangssignal der Wandlergruppe ein komplexes Signal erzeugt, das komplexe Signal normiert und um die gleiche Verzbgerungszeit wie das Empfangssignal verzögert. Die Generierung des komplexen Signals kann dabei an einer beliebigen Stellen in der Signalverarbeitung zum Beamforming erfolgen. Von den zeitverzögerten, normierten, komplexen Signalen wird ein komplexes Summensignal gebildet und sein Betrag gemittelt. Das so berechnete Wichtungssignal und das Gruppensignal werden multipliziert und bilden das gewichtete Gruppensignal. Sein Pegel ist abhängig vom Nutz-/Störverhältnis der empfangenen Schallwellen und der Zusammensetzung der empfangenen Störungen. Der damit erzielte Vorteil besteht darin, daß der Betrag des komplexen Summensignals die Phasenlagen der zum Gruppensignal aufaddierten verzögerten Empfangssignale wiedergibt. Wenn die verzögerten Empfangssignale konphas sind, stammen sie alle von der gleichen Schallquelle, nämlich von einem Ziel. Wenn die verzögerten Empfangssignale Phasenunterschiede aufweisen, sind Störungen überlagert. Das Wichtungssignal ist "1", wenn keine Störungen empfangen werden, es ist "0", wenn nur inkohärentes Rauschen empfangen wird.

Gemäß einer bevorzugten Ausführungsform der Erfindung wird die Stärke der Gewichtung der Gruppensignale durch einen Kontrollparameter eingestellt, mit dem das Wichtungssignal potenziert wird. Der Kontrollparameter wird abhängig von einer gewünschten Falschalarmrate, z.B. gleich fünf, gewählt. Bei einem Kontrollparameter von Null wird das Wichtungssignal eliminiert und ein herkömmliches lineares Beamforming eingestellt. Für einen Kontrollparameter größer Null werden mit größer werdendem Kontrollparameter abhängig von ihrem Nutz-/Störverhältnis die Gruppensignale immer stärker unterdrückt, wodurch die Falschalarmrate sinkt.

Die Erfindung ist anhand eines in der Zeichnung illustrierten Ausführungsbeispiels im folgenden näher beschrieben. Es zeigen:

Fig. 1     eine schematische Darstellung einer Draufsicht einer Zylinderbasis mit 21 elektroakustischen Wandlern zur Illustrierung der verschiedenen Wandlergruppen mit gemeinsam betriebenen elektroakustischen Wandlern,

Fig. 2     eine schematische Darstellung einer Draufsicht einer Linearantenne mit 9 elektroakustischen Wandlern zur Illustrierung des elektronischen Schwenkens der Richtcharakteristik der Linearantenne,

Fig. 3     ein Blockschaltbild einer Schaltungsanordnung zur Detektion und Peilung von Schallquellen mit der Empfangsantenne gemäß Fig. 1 oder 2,

Fig. 4     jeweils eine Darstellung einer Richtcharakteristik der Empfangsantenne in Fig. 1 in Polarkoordinaten für fünf verschiedene Frequenzbereiche der einfallenden Schallwellen, und zwar links in Fig. 4 bei der Bildung von Gruppensignalen nach dem Stand der Technik (lineare Richtungsbildung oder linear Beamforming) und rechts im Bild bei der Anwendung des erfindungsgemäßen Verfahrens zur Störbefreiung der Gruppensignale.

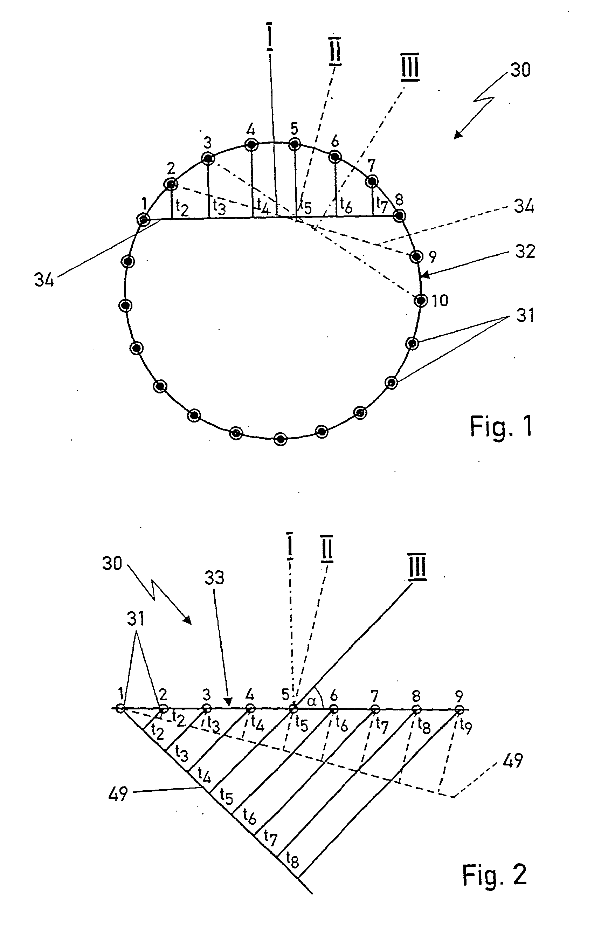

Zur Detektion und Peilung von Schallquellen in der Sonartechnik wird eine elektroakustische Empfangsantenne 30 verwendet, die entfernt von den Schallquellen im Wasser angeordnet ist. Im Ausführungsbeispiel der Fig. 1 ist die Empfangsantenne 30 eine sog. Zylinderbasis 32 mit z.B. einundzwanzig Wandlern 31, die äquidistant in Umfangsrichtung auf einer Kreislinie angeordnet sind. Wie nicht weiter dargestellt ist, sind zur Erzielung einer vertikalen Bündelung der Empfangsantenne 30, d.h. eines möglichst kleinen vertikalen Öffnungswinkels der Zylinderbasis 32, mehrere in Achsrichtung der Zylinderbasis 32 vertikal und äquidistant untereinander liegende Wandler zu einem sog. Stave zusammengefaßt. Jeder der einundzwanzig Wandler 31 in Fig. 1 gehört damit zu einem Stave. Jeweils eine Gruppe von Wandlern 31, im Ausführungsbeispiel der Fig. 1 jeweils acht Wandler 31 bzw. acht Staves, werden gemeinsam betrieben. Durch eine noch zu beschreibende Signalverarbeitung der Empfangssignale der elektroakustischen Wandler 31 einer Gruppe von gemeinsam betriebenen Wandlern 31 hat die Wandlergruppe eine Richtcharakteristik, deren Hauptrichtung mit I gekennzeichnet ist. Diese Richtcharakteristik der Wandlergruppe, auch Gruppencharakteristik genannt, wird zur horizontalen Abtastung der Antennenumgebung elektronisch geschwenkt, wobei durch Hinzufügen und Wegnehmen eines Wandlers 31 in der Wandlergruppe die Hauptrichtung der Richtcharakteristik horizontal um 360° gedreht werden kann. Die durch dieses sog. elektronische Schwenken sich verlagernde Richtcharakteristik ist in Fig. 1 beispielhaft bezüglich ihrer jeweiligen Hauptrichtung mit I - III gekennzeichnet.

In Fig. 2 ist eine Linearantenne 33 mit neun elektroakustischen Wandlern 31 dargestellt. Auch hier hat die Gruppe aller gemeinsam betriebenen Wandler 31 eine Richtcharakteristik, deren Hauptrichtung senkrecht auf der Wandleranordnung steht und in Fig. 2 mit I gekennzeichnet ist. Diese Hauptrichtung der Richtcharakteristik läßt sich durch eine geeignete Signalverarbeitung elektronisch Schwenken, so daß die Hauptrichtung der Richtcharakteristik unter einem spitzen Winkel $-90° < \alpha > +90°$ zur Antennenanordnung liegt. Zwei Beispiele der Hauptrichtung bei geschwenkter Richtcharakteristik sind in Fig. 2 mit II und III gekennzeichnet. Selbstverständlich ist es auch möglich diese Hauptrichtung II und III der Richtcharakteristik durch mechanisches Drehen der Wandleranordnung zu erzielen. Zur Verkleinerung des vertikalen Öffnungswinkels der Richtcharakteristik kann die Linearantenne 33 als Flächenantenne ausgebildet werden, wozu jeder der elektroakustischen Wandler 31 durch weitere vertikal untereinander äquidistant angeordnete elektroakustische Wandler zu einem sog. Stave ergänzt wird.

Zur Detektion und Peilung von Schallquellen werden in bekannter Weise aus den Empfangssignalen einer Gruppe von gemeinsam betriebenen elektroakustischen Wandlern 31 zeitlich aufeinanderfolgende Gruppensignale gebildet, indem die Empfangssignale entsprechend den unterschiedlichen k Richtungen der Gruppencharakteristiken mit unterschiedlichen Zeitverzögerungen konphas aufaddiert werden. Im Ausführungsbeispiel der Fig. 1 ergeben sich dabei für die j Wandler 31 (j=1 bis j=8) die Zeitverzögerungen $t_1$ bis $t_8$ in bekannter Weise aus der Wegstrecke, die die Schallwellenfront von der räumlichen Lage des jeweiligen Wandlers 31 bis zur Projektion des Wandlers 31 auf der Sehne 34 zurücklegt. Die Berechnung dieses Gruppensignals folgt der Gleichung

$$S_k(t) = \frac{1}{M} \sum_{j=1}^{M} s_j(t - t_j) \qquad (1),$$

wobei diese Berechnung ein linearer Prozeß ist, bei dem die Wellenform erhalten bleibt. Die Ergebnisse dieses Prozesses können deshalb direkt weiterverarbeitet und beispielsweise für einen Horchkanal aufbereitet werden.

Unter der Annahme, daß die Summation der Empfangssignale der Wandler 31 bzw. Staves unter dem korrekten Einfallswinkel erfolgt, addieren sich die Signale konstruktiv, während sich das umgebende Rauschen abschwächt. Anders ausgedrückt summieren sich bei dieser Berechnung des Gruppensignals gleichphasige Empfangssignale, während Phasenverschiebungen zur Abschwächung des Gruppensignals führen, die so groß sein können, daß schwache Signale durch starkes Rauschen maskiert werden. Um diesen Effekt zu verringern, wird das in herkömmlicher Weise berechnete Gruppensignal mit einem Wichtungssignal multipliziert, das durch die Phasenlagen oder das Maß der Kohärenz der verzögerten, zum Gruppensignal zusammengefaßten Empfangssignale bestimmt wird. Das Ergebnis dieser Multiplikation ist ein gewichtetes Gruppensignal, das bei Störungen, wie z. B. inkohärentem Rauschen, im Pegel vermindert wird, obwohl die empfangene Schallenergie wesentlich größer ist, während bei Empfang von Schallwellen einer einzigen Schallquelle, auch wenn diese nur eine geringe Schallenergie abstrahlt, der Pegel des Gruppensignals unvermindert erhalten bleibt. Die Stärke der Unterdrückung kann zusätzlich durch einen Kontrollparameter v erhöht werden. Für v=0 erhält man das bekannte lineare Gruppensignal, für größere v werden die Gruppensignale immer stärker vermindert, je weniger sie Empfangssignale enthalten, die nach ihrer Zeitverzögerung sich konphas addieren und somit von einem Ziel stammen.

Zur Berechnung des Wichtungssignals wird aus jedem Empfangssignal der Wandlergruppe ein komplexes Signal c(t) erzeugt. Bei der Verwendung einer Hilbert-Transformierten H(s(t)) wird das komplexe Signal analytisch beschrieben durch

$$c(t) = s(t) + i \cdot H(s(t)) = A(t) \cdot \exp[i \cdot \Phi(t)] \qquad (2).$$

A(t) beschreibt die Einhüllende von s(t) und $\Phi(t)$ die momentane Phase von s(t). Ein aus dem Empfangssignal $s_j(t)$ des Wandlers $W_j$ der Wandler 31 (mit j=1 bis M) gewonnenes komplexes Signal $c_j(t)$ wird zwecks Entfernung der Amplitudeninformation normiert:

$$p_j(t) = \frac{c_j(t)}{|c_j(t)|} \qquad (3).$$

Das komplexe normierte Signal $p_j(t)$ enthält nur noch die Phaseninformation. Dieses Signal $p_j(t)$ wird um die gleiche Verzögerungszeit $t_j$ wie das Empfangssignal $s_j(t-t_j)$ verzögert, und von den zeitverzögerten, normierten, komplexen Signalen $p_j(t-t_j)$ der Wandlergruppe wird die gemittelte Summe gebildet. Mathematisch ergibt sich damit folgender Berechnungsprozeß des Wichtungssignal $P_k(t)$ des Gruppensignals für die jeweilige Hauptrichtung k der Gruppencharakteristik:

$$P_k(t) = \frac{1}{M} \left| \sum_{j=1}^{M} p_j(t - t_j) \right| = \frac{1}{M} \left| \sum_{j=1}^{M} \exp[i \cdot \Phi_j(t - t_j)] \right| \qquad (4).$$

Für jede Hauptrichtung k der Gruppencharakteristik liegt damit der Wert im Bereich [0,1], wobei sich P(t)=0 für absolut inkohärente und P(t)=1 für kohärente Signale ergibt. Das Wichtungssignal $P_k$ ist damit ein Kohärenzmesser für die aus der Richtung k einfallenden Signale.

Beim Empfang wird nunmehr jedes Gruppensignal mit der Hauptrichtung k mit dem von inkohärenten Störungen abhängigen, momentanen Wichtungssignal $P_k(t)$ multipliziert, so daß sich ein bei Störungen vermindertes Gruppensignal $PWBF_k(t)$ gemäß

$$PWBF_k(t) = S_k(t) \cdot P_k(t) \qquad\qquad (5),$$

ergibt.

Zur Erhöhung der Detektionswahrscheinlichkeit kann die Bewertung des Gruppensignals durch einen Kontrollparameter v verstärkt werden, indem das momentane Wichtungssignal $P_k(t)$ mit dem Kontrollparameter v potenziert wird. Der Kontrollparameter v ist größer oder gleich Null gewählt, wobei für v=0 das Wichtungssignal $P_k(t)$ eins ist und keine Wichtung des herkömmlich gebildeten Gruppensignals $S_k(t)$ stattfindet. Für größere v werden Phasenschwankungen der zeitverzögerten Empfangssignale höher bewertet und dann immer stärker bei Störungen unterdrückt.

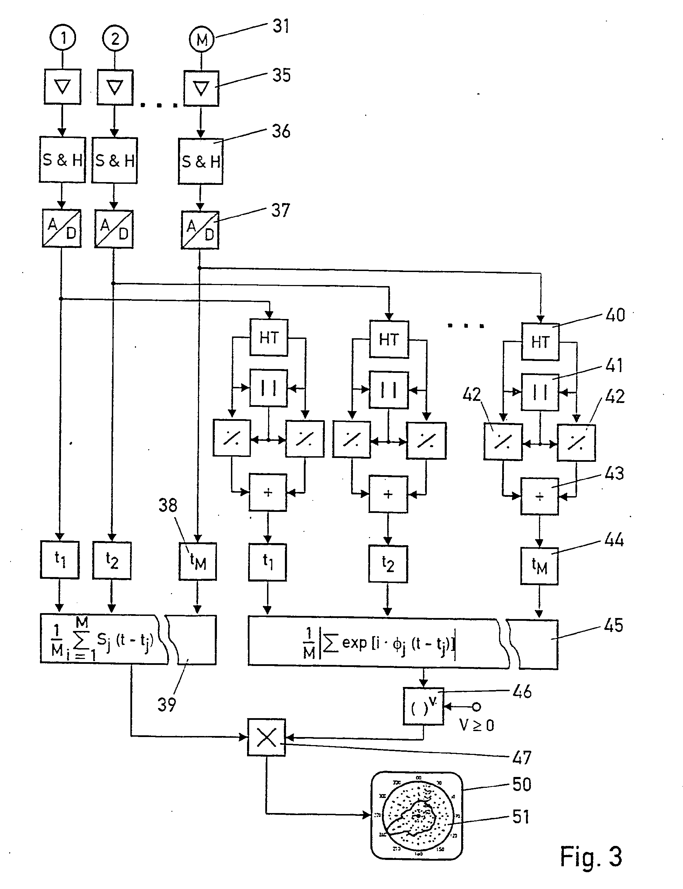

Eine Schaltungsanordnung zur Durchführung des beschriebenen Verfahrens der Bildung von gewichteten Gruppensignalen ist in Fig. 3 als Blockschaltbild dargestellt. Mit dieser Schaltungsanordnung werden folgende Verfahrensschritte im einzelnen durchgeführt:

Die Empfangssignale der M zu einer Wandlergruppe zusammengefaßten, gemeinsam betriebenen eltroakustischen Wandlern 31 werden verstärkt und abgetastet. Hierzu ist ein Verstärker 35 und eine Abtasteinheit 36 (Sample and Hold-Schaltung) vorgesehen. Die Abtastfrequenz beträgt ein Vielfaches der zugelassenen maximalen Frequenz der Empfangssignale. Zum Zwecke einer bevorzugten digitalen Signalverarbeitung werden die Abtastwerte oder Samples mittels eines Analog/Digital-Wandlers 37 digitalisiert. Alternativ ist eine analoge Signalverarbeitung möglich. Die einzelnen Samples werden in einem Zeitverzögerungsglied 38 um eine definierte Verzögerungszeit $t_j$ verzögert und dann einem Addierwerk 39 zugeführt.

Wie aus dem Blockschaltbild der Fig. 3 hervorgeht, wird dieser Vorgang auf die Empfangssignale eines jeden elektroakustischen Wandlers 31 der Wandlergruppe angewandt, wobei in Übereinstimmung mit Fig. 1 die Wandler in Fig. 3 mit den Nummern 1, 2 und M belegt sind. Die in den Zeitverzögerungsgliedern 38 jeweils eingestellte Verzögerungszeit ist entsprechend $t_1$, $t_2$ bis $t_M$ und wird gemäß Fig. 1 festgelegt. Im Addierwerk 39 werden die zeitverzögerten Samples konphas aufaddiert, wobei jeweils die gemittelte Summe über die einander zugeordneten Samples der M Empfangssignale gebildet wird. Am Ausgang des Addierwerks 39 ist das Gruppensignal $S_k(t)$ abnehmbar, das eine Richtcharakteristik mit der Hauptrichtung k der Wandlergruppe bildet.

Zur Berechnung des Wichtungssignals $P_k(t)$ wird jedes Sample des Empfangssignals einem Hilbert-Transformator 40 zugeführt, an dessen Ausgängen sowohl der Real- als auch der Imaginäranteil des Sample des komplexen Signals $c_j(t)$ abgenommen werden kann. Real- und Imaginäranteil werden getrennt einerseits einem Betragsbildner 41 und andererseits einem Dividierer 42 zugeführt, dessen anderer Eingang jeweils mit dem Ausgang des Betragsbildners 41 verbunden ist. Der Betragsbildner 41 stellt jedem Dividierer 42 den Betrag des Sample des komplexen Signals $|c_j(t)|$ zur Verfügung, und in den beiden Dividierern 42 wird durch Quotientenbildung der Real- und Imaginäranteil normiert. Der normierte Realteil und der normierte Imaginäranteil wird im Addierer 43 zum Sample des normierten, komplexen Signals $p_j(t)$ wieder zusammengesetzt, das im Zeitverzögerungsglied 44 um die gleiche Verzögerungszeit $t_j$ verzögert wird, um die das Sample des Emfangssignals, mit dem das komplexe Signal erzeugt worden ist, verzögert worden ist. Das zeitverzögerte, komplexe, normierte Sample wird einem Addierwerk 45 zugeführt.

Wie aus dem Blockschaltbild der Fig. 3 hervorgeht, wird dieser Vorgang auf alle Samples der Emfangssignale eines jeden elektroakustischen Wandlers 31 der Wandlergruppe angewandt. Die in den Zeitverzögerungsgliedern 44 eingestellte Verzögerungszeit ist damit entsprechend $t_1$, $t_2$ bis $t_M$. In dem Addierwerk 45 werden alle verzögerten Samples aufaddiert und der Mittelwert der Summe gebildet. Am Ausgang des Addierwerks 45 ist das momentane Wichtungssignal $P_k(t)$ abnehmbar, der die Phasenlagen oder Inkohärenz der addierten Samples angibt. Dieses Wichtungssignal $P_k(t)$ wird in einem Potenzierer 46 mit einem abhängig von einer gewünschten Falschalarmrate wählbaren Kontrollparameter v potenziert und einem Multiplizierer 47 zugeführt. Dem Multiplizierer 47 ist auch das am Ausgang des Addierwerks 39 abgenommene Sample des dort gebildeten Gruppensignals zugeführt. Als Ergebnis der Multiplikation steht am Ausgang des Multiplizierers 47 ein gewichtetes Sample des Gruppensignals an.

Die vorstehend beschriebenen Verfahrensschritte werden nachfolgend auf die Empfangssignale der nächsten Wandlergruppe, bestehend aus den Wandlern 2 - 9, der dritten Wandlergruppe, bestehend aus den Wandlern 3 - 10, usw. angewendet, bis die Hauptrichtung der Gruppencharakteristiken I, II, III usw. über das Panorama von 360° horizontal geschwenkt worden ist. Das gewichtete Gruppensignal mit dem größten Pegel gibt die Richtung der von einer Schallquelle aus einer Empfangsrichtung einfallenden Wellenenergie an, die über die Richtcharakteristik 51 der Empfangsantenne 30 empfangen und auf einer Anzeigeeinheit 50 dargestellt ist. Die Darstellung erfolgt im Ausführungsbeispiel der Fig. 3 in Polarkoordinaten.

Das gleiche Signalverarbeitungsverfahren kann auch auf die Empfangswandler 31 der Linearantenne 33 gemäß Fig. 2 angewendet werden. Hier besteht die Wandlergruppe immer aus der Gesamtheit der neun gemeinsam betriebenen Wandler 31. Das elektronische Schwenken der Richtcharakteristik der Linearantenne 33 erfolgt durch Änderung der individuellen Verzögerungszeiten für die Empfangssignale der Wandler 31, die sich gemäß Fig. 2 aus den Laufzeiten der aus einer Hauptrichtung I bzw. II bzw. III einfallenden Schallwellenfront zwischen der räumlichen Lage der Wandler 31 und Projektion der Wandler 31 auf einer rechtwinklig zur Hauptrichtung durch den ersten Wandler 31 verlaufenden Projektionslinie 49 ergeben.

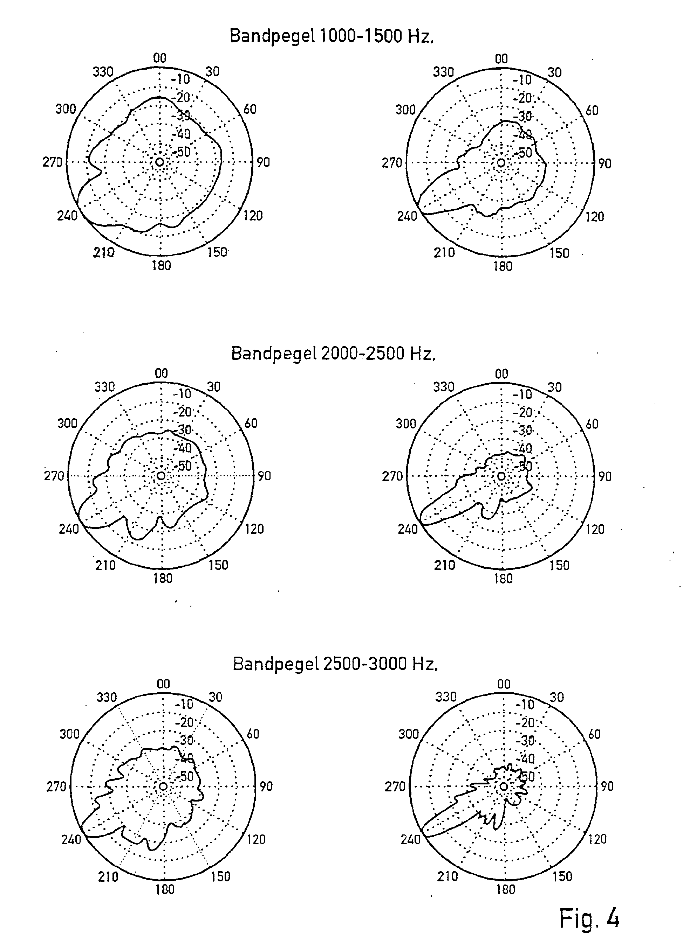

In Fig. 4 sind fünf Beispiele für in der Anzeigeeinheit 50 in Polarkoordinaten dargestellte Richtcharakteristiken 51 der als Zylinderbasis 32 ausgebildeten Empfangsantenne 30 gemäß Fig. 1 gezeigt, und zwar für fünf verschiedene Frequenzbänder der einfallenden Schallwellen. Dabei sind in Fig. 4 links im Bild die Richtcharakteristiken der Zylinderbasis dargestellt, wie sie sich aus den ungewichteten Gruppensignalen ergeben, während rechts in Fig. 4 die Richtcharakteristiken dargestellt sind, die sich mit den erfindungsgemäß gewichteten Gruppensignalen ergeben. Dabei ist der Kontrollparameter v=1 gewählt. Der Vergleich der Darstellungen zeigt eine durch die Wichtung deutlich verbesserte Richtcharakteristik der Empfangsantenne 30 mit sehr viel schmalerer Hauptkeule und stärker gedämpften Nebenkeulen. Wie deutlich zu erkennen ist, läßt sich durch die Wichtung bereits in einem unteren Frequenzband eine Schallquelle detektieren, während bei der ungewichteten Bildung der Gruppensignale die Empfangsantenne noch quasi "blind" ist. Mit zunehmender Frequenz der einfallenden Schallwellen wird die Richtcharakteristik der Empfangsantenne 30 in beiden Fällen zunehmend verbessert, und die Hauptkeule der Richtcharakteristik, die die Empfangsrichtung der einfallen Schallwellen definiert, wird schmaler, so daß Peilungsgenauigkeit und Zieltrennung verbessert werden.

## Patentansprüche

1. Verfahren zur Störbefreiung von Gruppensignalen, die aus Empfangssignalen einer Gruppe von gemeinsam betriebenen elektroakustischen Wandlern (31) durch konphase Addition der zeitverzögerten (38) Empfangssignale gebildet werden zur Erzeugung einer Richtcharakteristik, wobei die Zeitverzögerung eines Empfangssignals durch die Hauptrichtung der Richtcharakteristik und die Lage des Wandlers (31) bezüglich der aus der Hauptrichtung einfallenden Wellenfront bestimmt ist,
   bei dem aus den Empfangssignalen der Wandlergruppe komplexe Signale gebildet werden, **dadurch gekennzeichnet, dass** das Gruppensignal mit einem Wichtungssignal multipliziert wird und dass zur Berechnung des Wichtungssignals die komplexen Signale der Empfangssignale der Wandlergruppe normiert und um die gleichen Verzögerungszeiten wie die Empfangssignale der Wandlergruppe verzögert werden und aus den zeitverzögerten, normierten, komplexen Signalen ein komplexes Summensignal gebildet und dessen Betrag gemittelt wird (45).

2. Verfahren nach Anspruch 1, **dadurch gekennzeichnet, dass** der gemittelte Betrag des Summensignals der verzögerten, normierten , komplexen Signale vor Verwendung als Wichtungssignal mit einem Kontrollparameter (v) potenziert wird.

3. Verfahren nach Anspruch 2, **dadurch gekennzeichnet, dass** der Kontrollparameter (v) größer Null gewählt wird.

4. Verfahren nach einem der Ansprüche 1 bis 3, **dadurch gekennzeichnet, dass** die Empfangssignale mit einer konstanten Abtastfrequenz abgetastet und die Verfahrensschritte auf jeden Abtastwert angewendet werden und dass jeder Abtastwert der Gruppensignale mit dem aus den Abtastwerten der Empfangssignale berechneten, momentanen Wichtungssignal multipliziert wird.

5. Verfahren nach Anspruch 4, **dadurch gekennzeichnet, dass** die Abtastwerte vor Anwendung der Verfahrensschritte digitalisiert werden.

## Claims

1. Method for removal of interference from array signals which are formed from received signals from an array of jointly operated electroacoustic transducers (31) by in-phase addition of the time-delayed (38) received signals in order to produce a directional characteristic, with the time delay of a received signal being determined by the main direction of the directional characteristic and the position of the transducer (31) with respect to the wavefront that is incident from the main direction, in which complex signals are formed from the received signals from the transducer array, **characterized in that** the array signal is multiplied by a weighting signal, and **in that**, for calculation of the weighting signal, the complex signals of the received signals from the transducer array are normalized and are delayed by the same delay times as the received signals from the transducer array, and a complex sum signal is formed from the time-delayed, normalized complex signals, and its magnitude is averaged (45).

**2.** Method according to Claim 1, **characterized in that** the averaged magnitude of the sum signal of the delayed, normalized, complex signal is exponentiated by a monitoring parameter (v) before use as a weighting signal.

**3.** Method according to Claim 2, **characterized in that** the monitoring parameter (v) is chosen to be greater than zero.

**4.** Method according to one of Claims 1 to 3,
**characterized in that** the received signals are sampled at a constant sampling frequency and the method steps are applied to each sample value, and **in that** each sample value of the array signals is multiplied by the instantaneous weighting signal calculated from the sample values of the received signals.

**5.** Method according to Claim 4, **characterized in that** the sample values are digitized before use of the method steps.


**Revendications**

**1.** Procédé de suppression des parasites dans des signaux groupés qui sont formés à partir des signaux reçus d'un groupe de transducteurs électroacoustiques (31) fonctionnant en commun par addition cophasée des signaux reçus retardés (38) en vue de générer une caractéristique directionnelle, le retard d'un signal reçu étant déterminé par la direction principale de la caractéristiques directionnelle et la position du transducteur (31) par rapport au front d'onde incident depuis la direction principale, avec lequel des signaux complexes sont formés à partir des signaux reçus du groupe de transducteurs, **caractérisé en ce que** le signal groupé est multiplié par un signal de pondération et que pour calculer le signal de pondération les signaux complexes des signaux reçus du groupe de transducteurs sont normalisés et retardés des mêmes temps de retard que les signaux reçus des groupes de transducteurs et un signal total complexe est formé à partir des signaux complexes retardés normalisés et sa valeur est déterminée (45).

**2.** Procédé selon la revendication 1, **caractérisé en ce que** la valeur déterminée du signal total des signaux complexes retardés normalisés est élevée à une puissance avec un paramètre de contrôle (v) avant d'être utilisée comme signal de pondération.

**3.** Procédé selon la revendication 2, **caractérisé en ce que** le paramètre de contrôle (v) est choisi supérieur à zéro.

**4.** Procédé selon l'une des revendications 1 à 3, **caractérisé en ce que** les signaux reçus sont échantillonnés avec une fréquence d'échantillonnage constante et les étapes du procédé sont appliquées à chaque valeur échantillonnée et que chaque valeur échantillonnée des signaux groupés est multipliée avec le signal de pondération momentané calculé à partir des valeurs échantillonnées des signaux reçus.

**5.** Procédé selon la revendication 4, **caractérisé en ce que** les valeurs échantillonnées sont numérisées avant l'application des étapes du procédé.

Fig. 1

Fig. 2

Fig. 3

Bandpegel 1000-1500 Hz.

Bandpegel 2000-2500 Hz.

Bandpegel 2500-3000 Hz.

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3048240 A1
- US 4274148 A
- US 4931977 A